# EUROPEAN PATENT APPLICATION

(11) **EP 1 833 022 A1**
(43) Date of publication of application: **12.09.2007**
(21) Application number: 04808003.0
(22) Date of filing: 28.12.2004
(51) Int. Cl.: G06T 9/20, G06T 7/20

(54) **IMAGE PROCESSING DEVICE FOR DETECTING POSITION OF PROCESSING OBJECT IN IMAGE**

(71) Applicant: Fujitsu Ltd., Kawasaki-shi, Kanagawa 211-8588 (JP)
(72) Inventor: CHIBA, Hirotaka, Fujitsu Limited, Kawasaki-shi, Kanagawa21185 88 (JP); NODA, Tsugio, Fujitsu Limited, Kawasaki-shi, Kanagawa 2118588 (JP)
(74) Representative: Cooper-Rolfe, Elizabeth Louise
(86) International application number: PCT/JP2004/019648
(87) International publication number: WO 2006/070476

(57) **Abstract**

When image data of a partial image of a document that includes a plurality of process targets and a plurality of codes are input, a code included in the partial image is recognized, and relative position information that represents the relative position of a process target region to the code is obtained. Then, the position of the process target region within the partial image is identified by using the relative position information, and the image data of the process target is extracted from the identified process target region.

## Description

### Technical Field

The present invention relates to an image processing apparatus for identifying the position of a process target, which is included in image data, from the image data input with an image input device such as a scanner, a digital camera, etc.

### Background Art

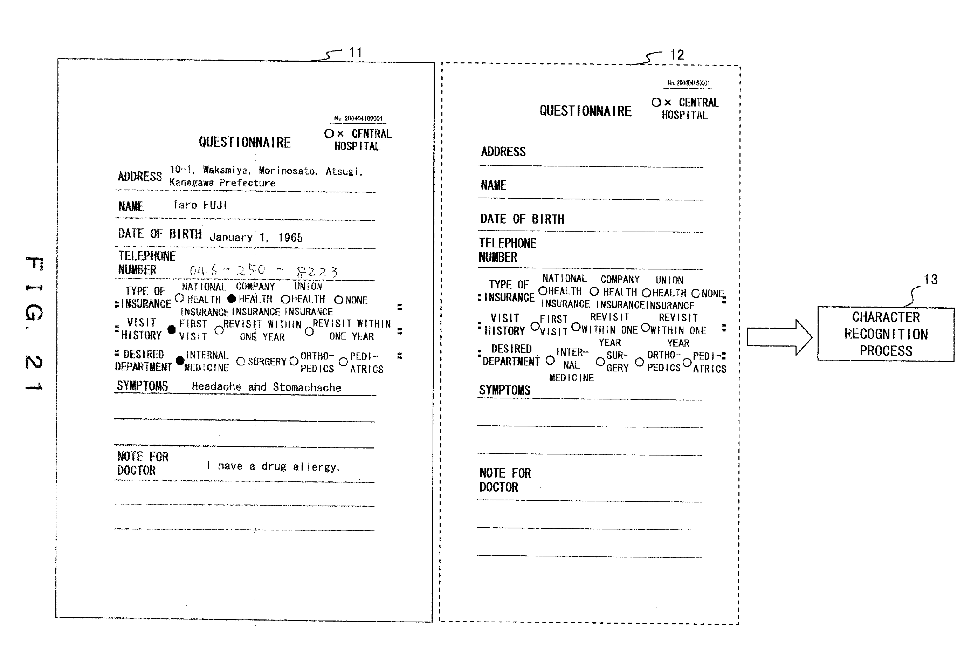

Fig. 21 shows an example of the inputs and the recognition of a conventional character recognition process. Conventionally, image processing is performed with the following procedures if a character recognition process of a document such as a business form, etc., which includes handwritten characters or printed characters, is executed.
1. Generates a read image 11 by reading the entire document with an image input device such as a flatbed scanner, etc. , which has a read range of a document size or larger.
2. Executes a character recognition process 13 by specifying prepared layout information 12 of the document as a template of character recognition at the time of the recognition process.

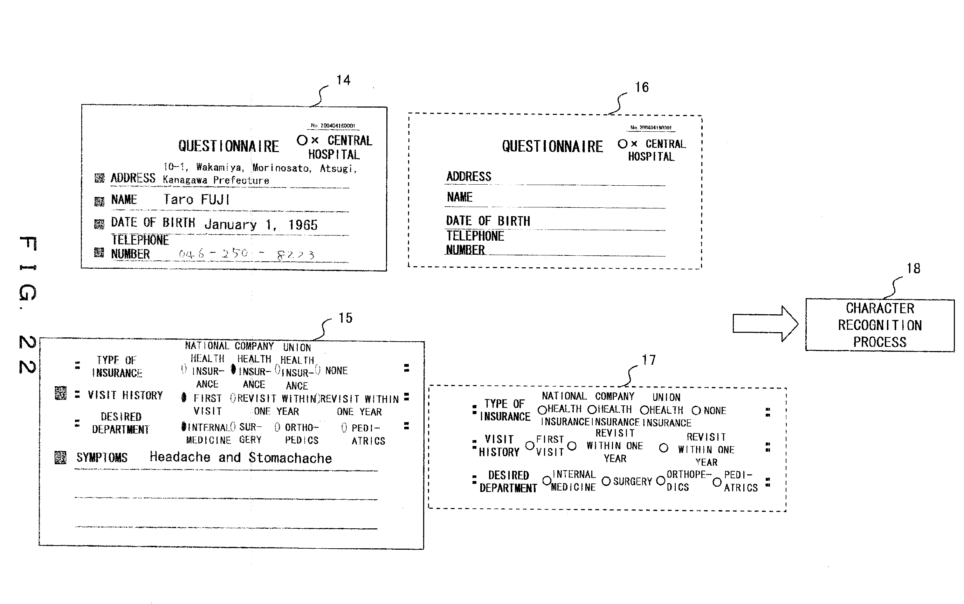

Here, if an image input device such as a handheld image scanner, a digital camera, etc., which cannot read the entire document at one time, is used, the character recognition process must be executed with any of the following methods.
(1) Creates a template which specifies layout information and a processing method, which suit the dimensions of the image input device, beforehand for each of a plurality of regions within the document, and a user selects a template to be used for each of the regions. For instance, in the example shown in Fig. 22, layout information 16 and 17 are selected respectively for two read images 14 and 15, and a character recognition process 18 is executed.
(2) Reconfigures the original document from the read image data, and prepares an input image equivalent to an image input device that covers the entire document.

For (2) among these methods, a method for generating an original image by merging images input with an image input device of a size that is smaller than a document size is known (for example, see Patent Document 1) . With this method, character regions of two document images that are partitioned and read are detected, and a character recognizing unit obtains character codes by recognizing printed characters within the character regions. An overlapping position detecting unit makes comparisons between the positions, the sizes and the character codes of the character regions of the two document images, and outputs, to an image merging unit, the position of a line image having a high degree of matching as an overlapping position. The image merging unit merges the two document images at the overlapping position.

With this method, however, character recognition cannot be properly made if a handwritten character exists on a merged plane, and an accurately merged image is not generated.

Additionally, in the character recognition process, a user must make a selection from among prepared templates according to a document, or must execute a process for matching between a read image and all of the templates.

At this time, as a method for automatically identifying a region to be recognized, a method for recording a barcode (one-dimensional code) 22 and marks 23~26 for a position correction, on a document 21 as shown in Fig. 23 is known (for example, see Patent Document 2). Regions 27~29 to be extracted as image data to be recognized, and contents of image processing for the regions 27~29 are recorded in the barcode 22, and the marks 23~26 for a position correction of the regions 27~29 are recorded on the document 21 in addition to the barcode 22.

This method, however, requires the barcode 22 and the marks 23∼26 for a position correction to be recorded, and cannot cope with partitioning and reading, which cannot read all of the marks 23~26.

Patent Document 3 relates to a print information processing system for generating a print image by combining image data and a code, whereas Patent Document 4 relates to a method for detecting a change in a scene of a moving image.
Patent Document 1: Japanese Published Unexamined Patent Application No. 2000-278514
Patent Document 2: Japanese Published Unexamined Patent Application No. 2003-271942
Patent Document 3: Japanese Published Unexamined Patent Application No. 2000-348127
Patent Document 4: Japanese Published Unexamined Patent Application No. H06-133305

### Disclosure of Invention

An object of the present invention is to automatically identify the position of a process target which is included in image data input with an image input device that cannot read the entire document at one time.

An image processing apparatus according to the present invention comprises a storing unit, a recognizing unit, and an extracting unit. The storing unit stores image data of a partial image of a document that includes a plurality of process targets and a plurality of codes. The recognizing unit recognizes a code included in the partial image among the plurality of codes, and obtains relative position information that represents the relative position of a process target region to the code. The extracting unit identifies the position of the process target region within the partial image by using the relative position information, and extracts image data of a process target from the identified process target region.

Within the document, the plurality of codes required to obtain the relative position information are arranged beforehand. For example, if the document is partitioned and read with an image input device, an image of a part of the document is stored in the storing unit as a partial image. The recognizing unit executes the recognition process for a code included in the partial image, and obtains relative position information based on a recognition result. The extracting unit identifies the position of the process target region, which corresponds to the code, by using the obtained relative position information, and extracts the image data of the process target.

With such an image processing apparatus, image data of a process target can be automatically extracted from the image data of a partial image that is input with an image input device such as a handheld image scanner, a digital camera, etc.

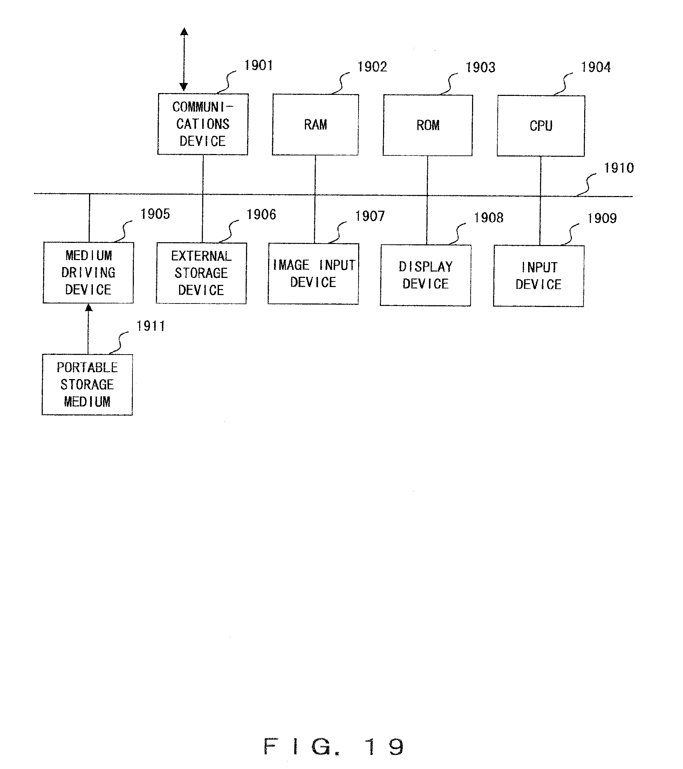

The storing unit corresponds, for example, to a RAM (Random Access Memory) 1902 that is shown in Fig. 19 and will be described later, whereas the recognizing unit and the extracting unit correspond, for example, to a CPU (Central Processing Unit) 1904 shown in Fig. 19.

### Brief Description of Drawings

Fig. 1 is a schematic showing images partitioned and read;
Fig. 2 is a schematic showing a two-dimensional code and an entry region;
Fig. 3 is a schematic showing region information;
Fig 4 is a flowchart showing a first image data extraction process;
Fig. 5 is a schematic showing a first image reconfiguration process;
Fig. 6 is a schematic showing document attribute information;
Fig. 7 is a flowchart showing the first image reconfiguration process;
Fig. 8 is a schematic showing process information;
Fig. 9 is a flowchart showing an automated image process;
Fig. 10 is a schematic showing a second image reconfiguration process;
Fig. 11 is a flowchart showing the second image reconfiguration process;
Fig. 12 is a schematic showing the superimposed printing of two-dimensional codes and characters;
Fig. 13 is a schematic showing a storage number within a server;
Fig. 14 is a flowchart showing a second image data extraction process;
Fig. 15 is a block diagram showing a configuration of an image processing apparatus for inputting a moving image, and for recognizing a code;
Fig. 16 is a schematic showing a method for inputting a moving image;
Fig. 17 is a schematic showing a change in a code amount in a moving image;
Fig. 18 is a flowchart showing a process for inputting a moving image and for recognizing a code;
Fig. 19 is a block diagram showing a configuration of an image processing apparatus;
Fig. 20 is a schematic showing methods for providing a program and data;
Fig. 21 is a schematic showing a conventional first character recognition process;
Fig. 22 is a schematic showing a conventional second character recognition process; and

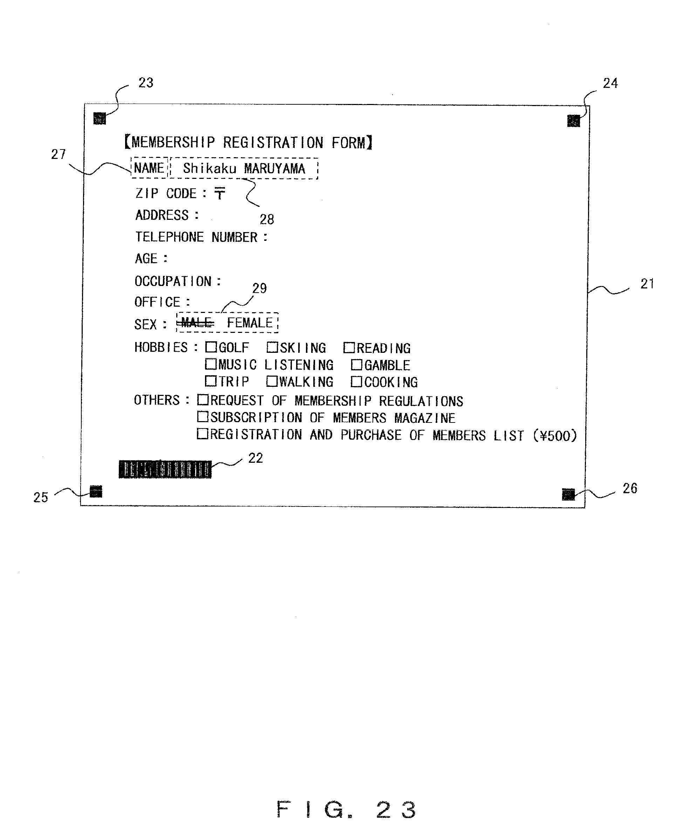

Fig. 23 is a schematic showing a conventional method for identifying recognition targets.

### Best Mode of Carrying Out the Invention

A best mode for carrying out the present invention is hereinafter described in detail with reference to the drawings.

In this embodiment, a code in which layout information of one or more entries is recorded and entries are arranged within a document in order to read the document by using an image input device that is not dependent on a document size. Then, the image processing apparatus initially recognizes the layout information, which is recorded in the code, from image data input with the image input device, and then extracts the image data of an entry of a process target from the recognized information.

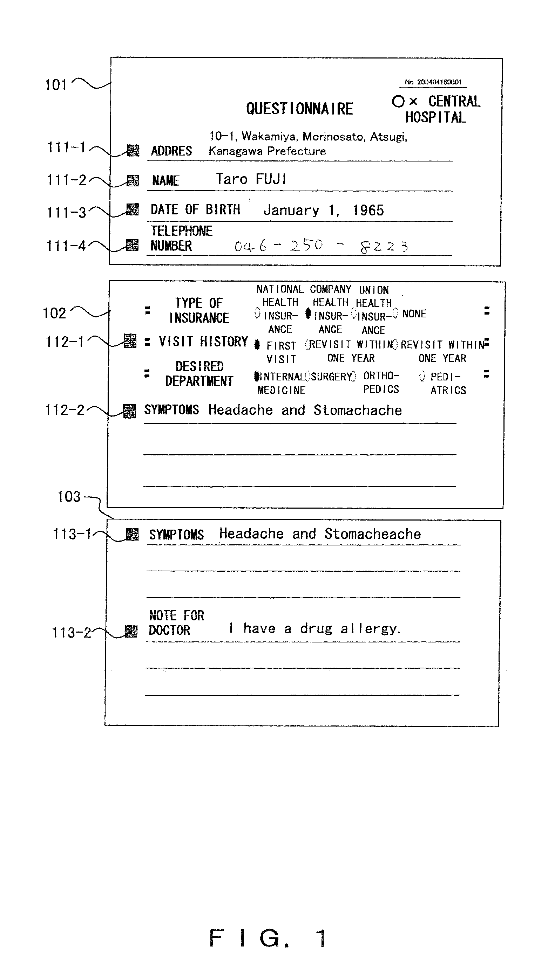

Fig. 1 shows an example of images read from a document in such a code image process. In this case, two-dimensional codes 111-1~111-4, 112-1, 112-2, 113-1 and 113-4 are arranged in correspondence with entries within the document, and the document is partitioned into three images 101~103 and read.

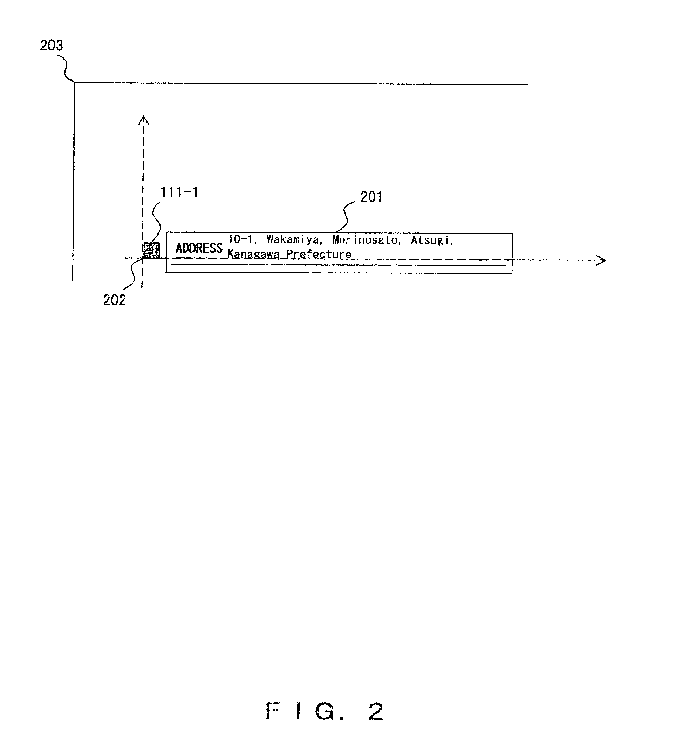

In each of the two-dimensional codes, information about the relative position of an entry region to the two-dimensional code, and information about the absolute position of the entry region within the document are recorded. For example, in the two-dimensional code 111-1, the information about the relative position and the absolute position of an entry region 201 are recorded as shown in Fig. 2. The relative position is represented with the coordinate values of the entry region 201 in a relative coordinate system the origin of which is a position 202 of the two-dimensional code 111-1. In the meantime, the absolute position is represented with the coordinate values of the entry region 201 in an absolute coordinate system the origin of which is a predetermined reference point 203 within the document.

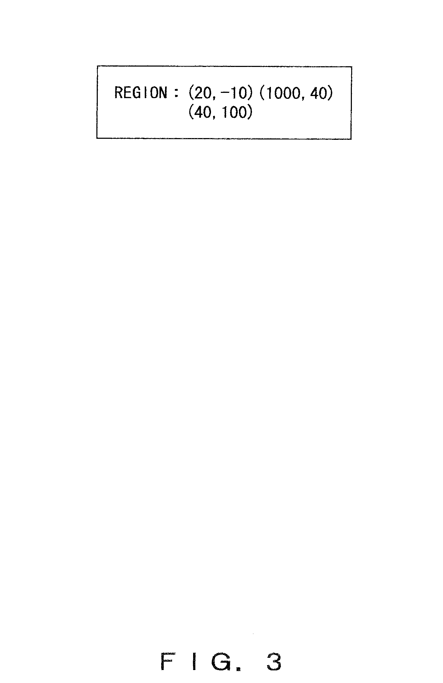

Fig. 3 exemplifies region information recorded in the two-dimensional code 111-1. (20, -10) and (1000, 40) are the relative position information of the entry region 201, whereas (40, 100) is the absolute position information of the entry region 201. In this example, one two-dimensional code is provided for each entry. If one two-dimensional code is provided for a plurality of entries, region information is recorded for each of the plurality of entries.

After reading the document, the image processing apparatus recognizes the two-dimensional code, extracts the region information, identifies the entry region by using the relative position information, and extracts the image data of the region. Furthermore, the image processing apparatus extracts the layout information of the target entry from the layout information for character recognition of the entire document, and executes a character recognition process only for the target entry by applying the layout information of the target entry to the image data of the entry region.

With such a two-dimensional code, the image data of an entry within the document can be extracted, and layout information corresponding to the entry among the layout information of the entire document can be extracted. Accordingly, the character recognition process can be executed even if a mark for a position correction of an entry region is not included within a read image.

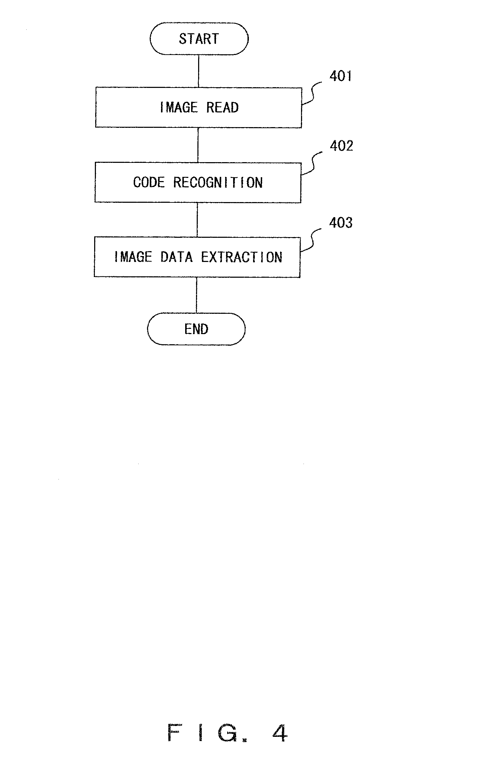

Fig. 4 is a flowchart showing such an image data extraction process. The image processing apparatus initially reads an image from a document (step 401), and recognizes a two-dimensional code included in the read image (step 402). Then, the image processing apparatus extracts image data of a corresponding entry region based on region information included in a recognition result (step 403).

A method for reconfiguring the image of the entire document from images partitioned and read is described next. In this case, document attribute information is recorded in a two-dimensional code, and the image processing apparatus reconfigures the image of the document by rearranging image data extracted respectively from the read images with the use of the document attribute information.

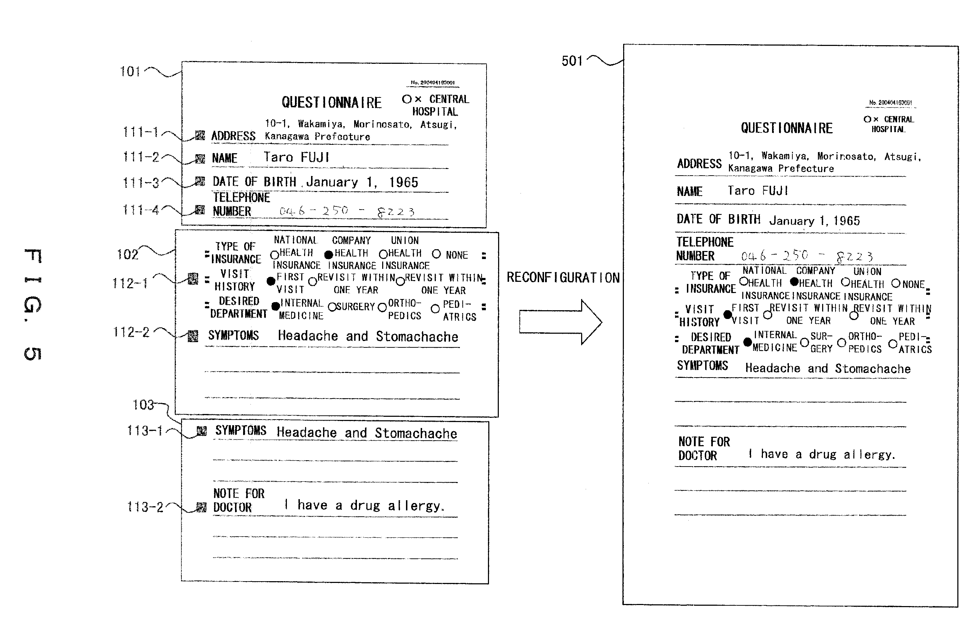

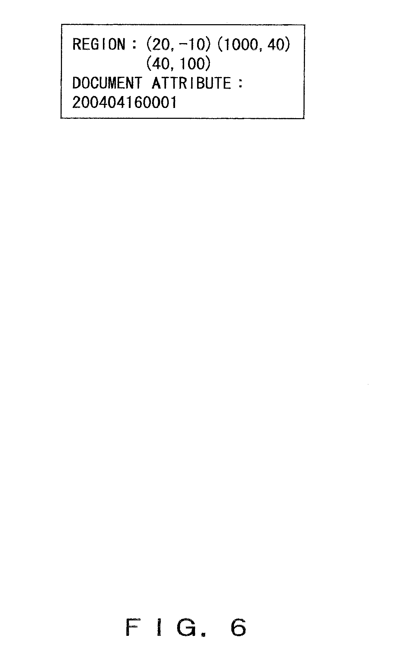

Fig. 5 shows such an image reconfiguration process. In this example, a document image 501 is generated from the three read images 101~103 shown in Fig. 1. For example, in the two-dimensional codes 111-1~111-4, 112-1, 112-2, 113-1 and 113-2, document attribute information such as document identification information, etc. is recorded in addition to the region information as shown in Fig. 6.

The image processing apparatus recognizes each of the two-dimensional codes after reading the partial documents over a plurality of times, and reconfigures the document image 501 by using image data extracted based on the region information of two-dimensional codes having the same document attribute information. At this time, the document image 501 may be reconfigured including the image data of the two-dimensional codes, or reconfigured by deleting the image data of the two-dimensional codes.

Document attribute information and layout information, which are recorded in a two-dimensional code, are used in this way, whereby the image of an original document can be easily restored even if the document is dividedly read over a plurality of times.

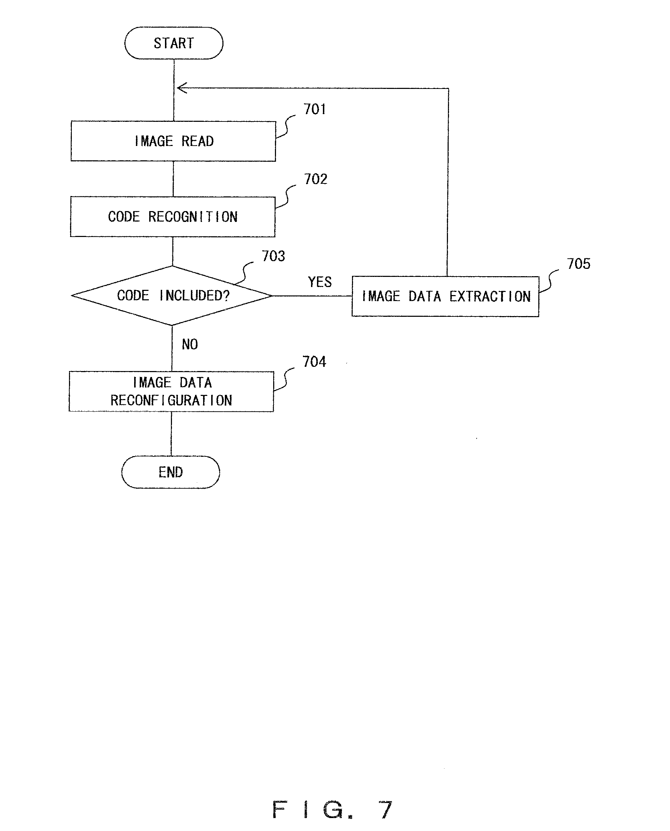

Fig. 7 is a flowchart showing such an image reconfiguration process. The image processing apparatus initially reads an image from a document (step 701), and recognizes a two-dimensional code included in the read image (step 702) . At this time, the image processing apparatus checks whether or not a two-dimensional code is included in the read image (step 703). If the two-dimensional code is included, the image processing apparatus extracts the image data of an entry region in a similar manner as in step 403 of Fig. 4 (step 705). Then, the image processing apparatus repeats the processes in and after step 701.

If the two-dimensional code is not included in the image in step 703, the image processing apparatus reconfigures the document image by using image data, which corresponds to the same document attribute information, among the image data extracted until at that time (step 704) .

A method for automatically applying a process such as character recognition, etc. for extracted image data is described next. In this case, process information is recorded in a two-dimensional code, and the image processing apparatus automatically executes a process specified by the process information for image data extracted from each read image.

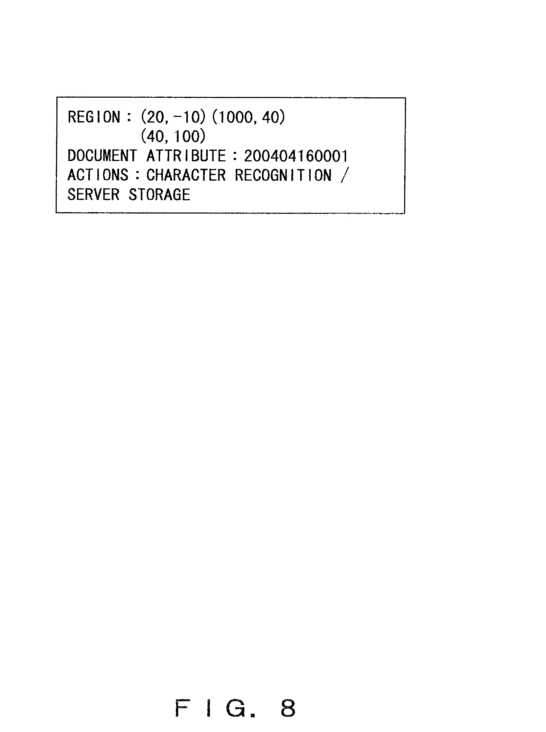

In the two-dimensional code, an action that represents a process applied to an entry region is recorded in addition to region information and document attribute information as shown in Fig. 8. For example, if character recognition and server storage are recorded as actions, the image processing apparatus executes a character recognition process for the image data of the corresponding entry region, and stores the data of a process result in a server based on the information. A process for storing image data in a file unchanged can be also recorded as an action.

The process information of image data is recorded in a two-dimensional code in this way, whereby postprocesses, such as character recognition, storage of image data unchanged, etc. , which are executed after an image read, can be automated. Accordingly, a user does not need to execute a process by manually classifying image data even if processes that are different by entry are executed.

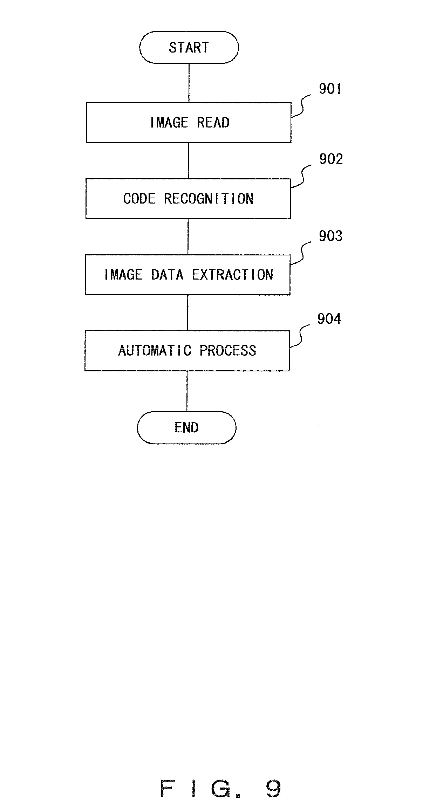

Fig. 9 is a flowchart showing such an automated image process. Processes in steps 901~903 of Fig. 9 are similar to those in steps 401~403 of Fig. 4. When image data is extracted, the image processing apparatus automatically executes a specified process based on process information recorded in the corresponding two-dimensional code (step 904).

A method for partitioning and reading an entry region that is larger than a read width when an image input device the read width of which is smaller than the width of a document is used, is described next. For example, a case where the macro shooting function of a digital camera is used corresponds to this case. In this case, two or more two-dimensional codes are so arranged, for example, as to enclose an entry region, in different positions in the same document for one entry region.

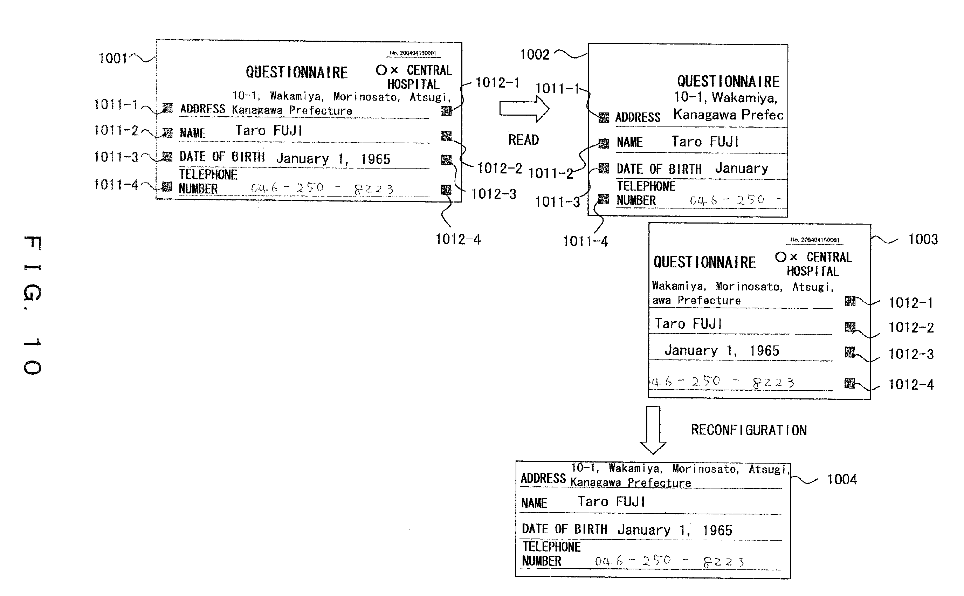

Fig. 10 exemplifies such an arrangement of two-dimensional codes. In this example, two-dimensional codes 1011-i and 1012-i (i=1, 2, 3, 4) are arranged to respectively enclose the entries of a document 1001 at the left and the right.

If this document 1001 is partitioned into images 1002 and 1003 and read, the image processing apparatus extracts image data, which corresponds to one entry, respectively from the two read images 1002 and 1003 by using relative position information recorded in the two-dimensional codes 1012-i and 1012-i. Then, the image processing apparatus reconfigures an image 1004 of the entire document by using absolute position information recorded in the two dimensional codes 1012-i and 1012-i.

In this way, image data corresponding to an entry can be reconfigured and extracted even if one entry region is dividedly read over twice.

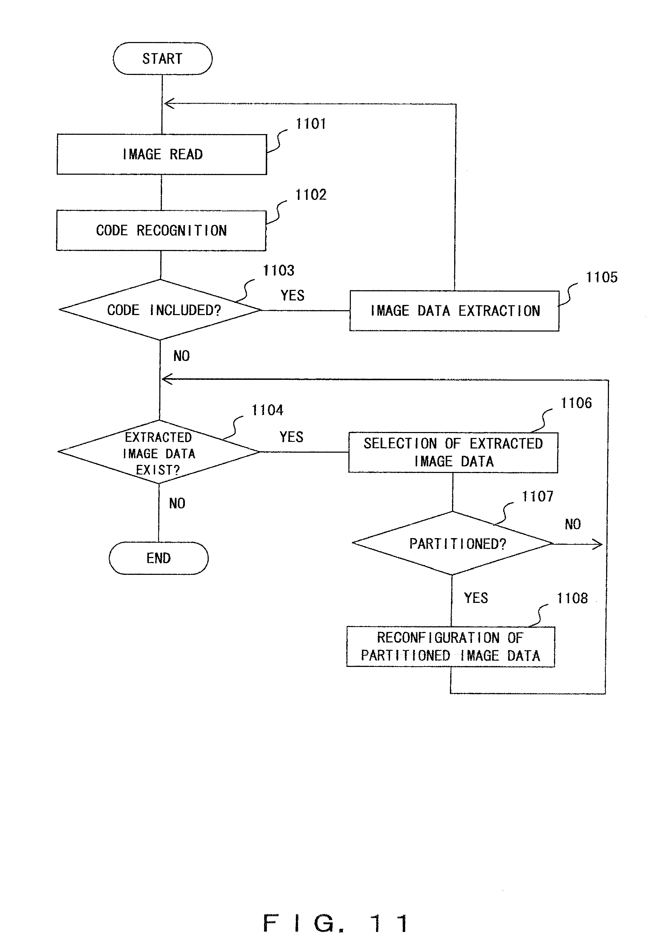

Fig. 11 is a flowchart showing such an image reconfiguration process. Processes in steps 1101~1103 and 1105 of Fig. 11 are similar to those in steps 701~703 and 705 of Fig. 7.

If a two-dimensional code is not included in an image in step 1103, the image processing apparatus next checks whether or not the image data of an entry region is extracted (step 1104) . If the extracted image data exist, the image processing apparatus selects one piece of the extracted image data (step 1106), and checks whether or not the image data corresponds to a partitioned part of one entry region (step 1107).

If the image data corresponds to the partitioned part, the image processing apparatus reconfigures the image data of the entire entry region by using image data of other partitioned parts that correspond to the same entry region (step 1108) . Then, the image processing apparatus repeats the processes in and after step 1104 for the next piece of the image data. If the image data corresponds to the whole of one entry region in step 1107, the image processing apparatus repeats the processes in and after step 1104 without performing any other operations.

A method for arranging a two-dimensional code without narrowing the available region of a document is described next. In this case, a two-dimensional code is printed by being superimposed on an entry in a color different from the printing color of the entry. For example, if the contents of the entry are printed in black, the two-dimensional code is printed in a color other than black. This prevents the available area of a document from being restricted due to an addition of a two-dimensional code.

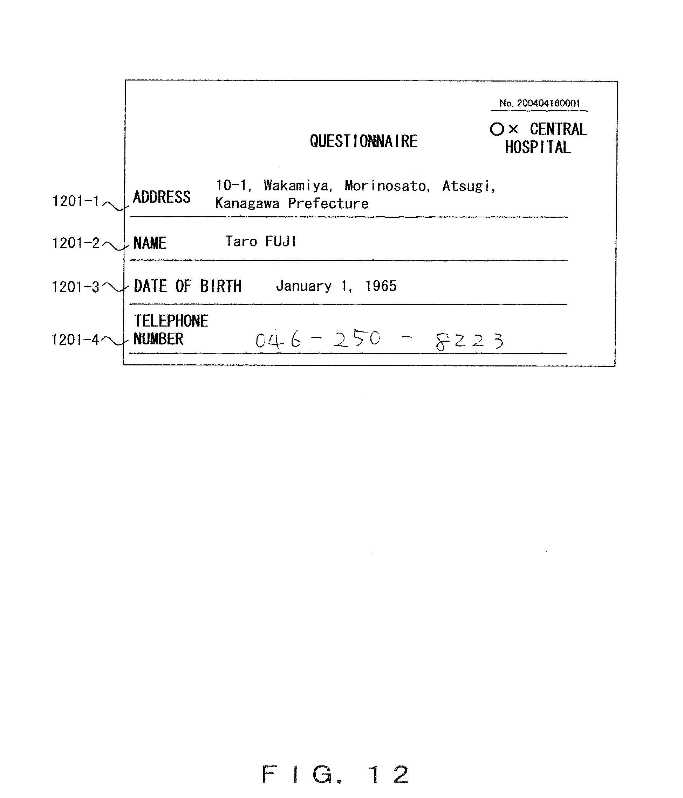

Fig. 12 exemplifies the layout of such a document. In this example, a two-dimensional code 1201-i (i=1, 2, 3, 4) is superimposed on the printed characters of each entry and printed in a different color. The image processing apparatus separates only the two-dimensional codes from the read image of this document, recognizes the two-dimensional codes, and extracts the image data of the entry regions. For the superimposed printing and the recognition of a two-dimensional code and characters in different colors, for example, the method referred to in the above described Patent Document 3 is used.

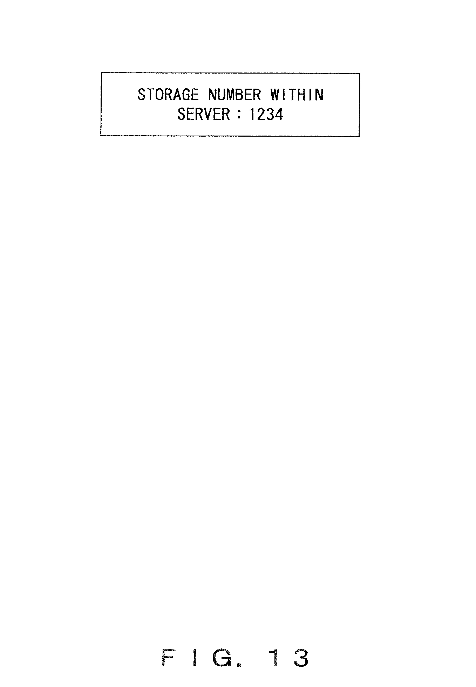

A method for recording region information, etc. in a data management server instead of a two-dimensional code and for using the information, etc. at the time of a read is described next. A two-dimensional code requires a printing area of a certain size depending on the amount of information to be recorded. Therefore, to reduce the area of the two-dimensional code to a minimum, the above described region information, document attribute information and process information are recorded in the server, and only identification information such as a storage number, etc., which identifies information within the server, is recorded in the two-dimensional code as shown in Fig. 13.

The image processing apparatus refers to the server by using the identification information recorded in the two-dimensional code, and obtains information about the corresponding entry. Then, the image processing apparatus extracts the image data of the entry region by using the obtained information as a recognition result of the two-dimensional code, and executes necessary processes such as character recognition, etc.

Contents to be originally recorded in a two-dimensional code are stored in the server in this way, whereby the printing area of the two-dimensional code can be reduced.

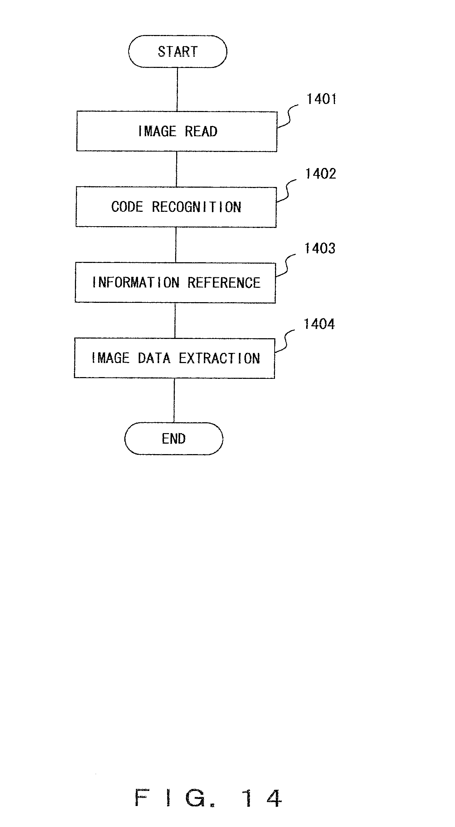

Fig. 14 is a flowchart showing such an image data extraction process. Processes in steps 1401, 1402 and 1404 of Fig. 14 are similar to those in steps 401~403 of Fig. 4. When a two-dimensional code is recognized in step 1402, the image processing apparatus refers to the data management server by using identification information of a recognition result, and obtains corresponding storage information (step 1403). Then, the image processing apparatus extracts the image data of the entry region by replacing the recognition result with the obtained information.

In the meantime, also a moving image input camera that can shoot a moving image exists in addition to a handheld image scanner and a digital camera. If such an input device is used, code recognition is made while an input moving image is sequentially being recognized with the conventional code recognition. In this embodiment, however, images of both a two-dimensional code and an entry region, which are included in a document, are required simultaneously, and image recognition must be made when the two-dimensional code and the entry region are determined as input targets. Since the conventional code recognition focuses attention only on a code, it cannot be applied to the recognition process of this embodiment.

Therefore, this embodiment focuses attention on the movement of a document when the document is moved and regarded as an input target in the stationary state, and the image processing apparatus is controlled to detect the move of the document from a moving image by executing a scene detection process while inputting the moving image of the document, and to execute the recognition process when the document stands still.

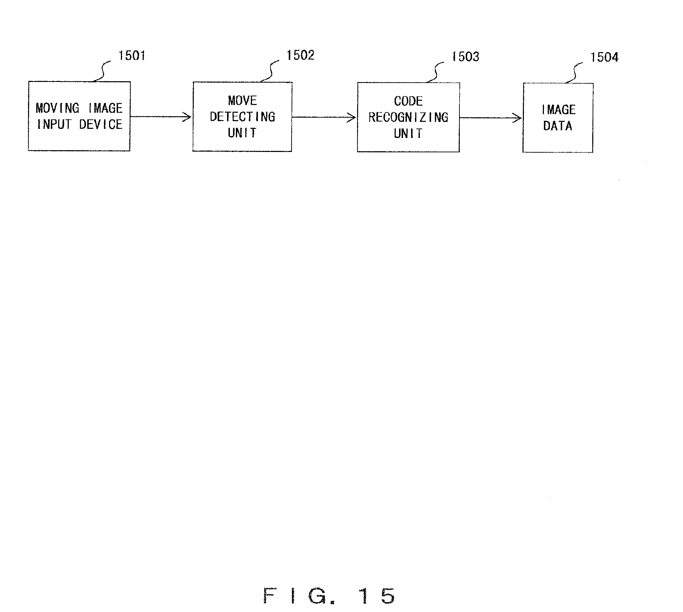

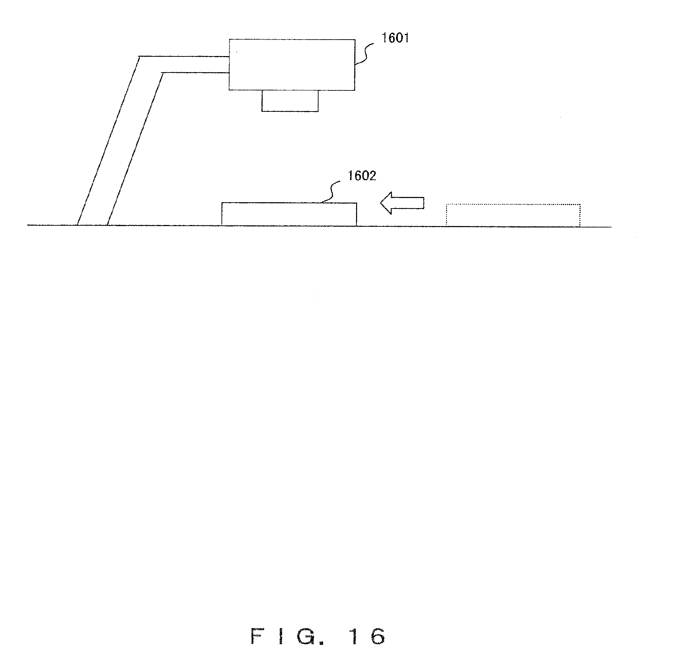

Fig. 15 is a block diagram showing a configuration of such an image processing apparatus. The image processing apparatus of Fig. 15 comprises a moving image input device 1501, a move detecting unit 1502, and a code recognizing unit 1503. The moving image input device 1501 is, for example, a moving image input camera 1601 shown in Fig. 16, and inputs the moving image of a document 1602 that moves under the camera.

The move detecting unit 1502 executes the scene detection process to detect the move of a recognition target included in the moving image. For the scene detection process, by way of example, the method referred to in the above described Patent Document 4 is used. Namely, a moving image is coded, and a scene change is detected from a change in a code amount. The code recognizing unit 1503 executes the recognition process for a two-dimensional code when the recognition target is detected to stand still, and extracts image data 1504 of the corresponding entry region.

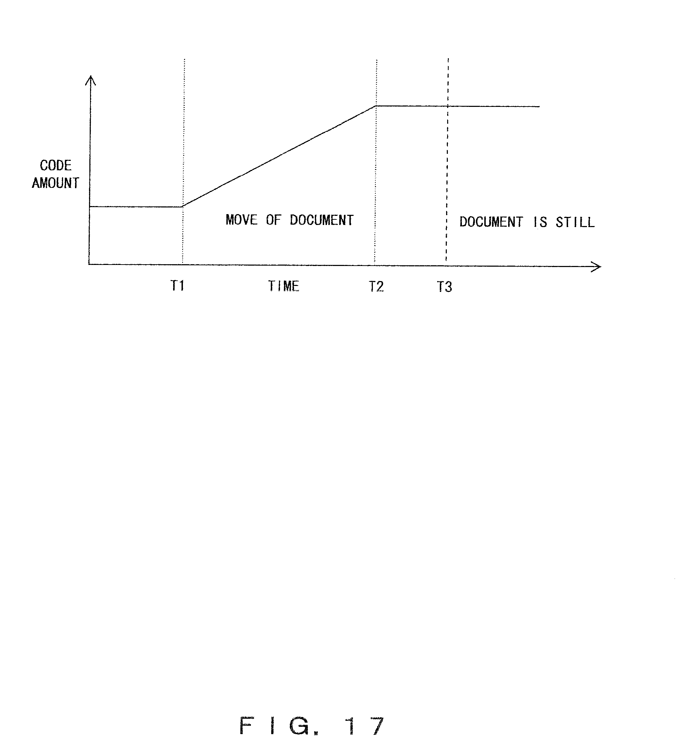

For example, if the code amount of the moving image changes as shown in Fig. 17, the document is regarded as moving from a time T1 to a time T2, and as standing still at and after the time T2. Therefore, the code recognizing unit 1503 waits until the document stands still, and starts the recognition process at a time T3.

The recognition process is controlled according to the result of scene detection, whereby the present invention can be applied also to an image input with a moving image input camera.

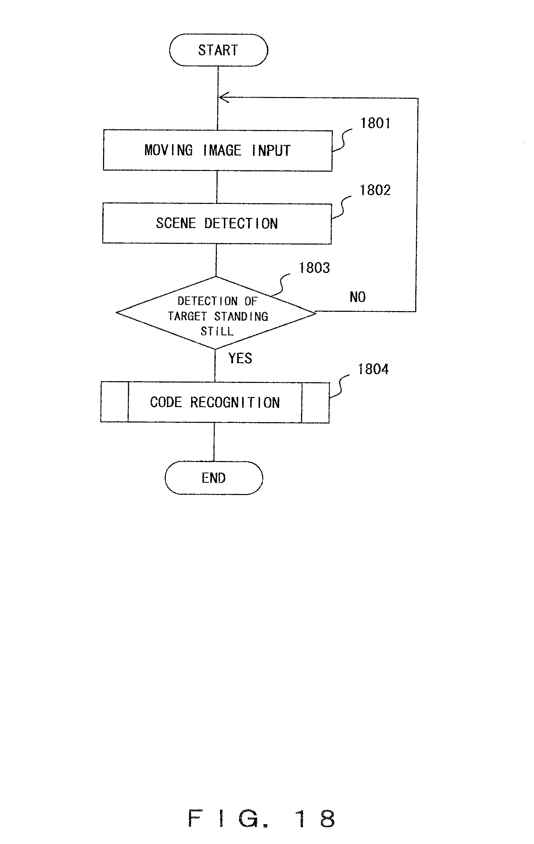

Fig. 18 is a flowchart showing such a code recognition process. The image processing apparatus initially inputs the moving image of a document (step 1801), executes the scene detection process (step 1802), and checks whether or not a recognition target stands still (step 1803) . If the recognition target does not stand still, the image processing apparatus repeats the processes in and after step 1801. Or, if the recognition target stands still, the image processing apparatus executes the recognition process for a two-dimensional code included in the image (step 1804).

Fig. 19 is a block diagram showing a configuration implemented when the above described image processing apparatus is configured with an information processing device (computer). The image processing apparatus shown in Fig. 19 comprises a communications device 1901, a RAM (Random Access Memory) 1902, a ROM (Read Only Memory) 1903, a CPU (Central Processing Unit) 1904, a medium driving device 1905, an external storage device 1906, an image input device 1907, a display device 1908, and an input device 1909, which are interconnected by a bus 1910.

The RAM 1902 stores input image data, whereas the ROM 1903 stores a program, etc. used for the processes, the CPU 1904 executes necessary processes by executing the program with the use of the RAM 1902. The move detecting unit 1502 and the code recognizing unit 1503, which are shown in Fig. 15, correspond to the program stored in the RAM 1902 or the ROM 1903.

The input device 1909 is, for example, a keyboard, a pointing device, a touch panel, etc., and used to input an instruction or information from a user. The image input device 1907 is, for example, a handheld image scanner, a digital camera, a moving image input camera, etc., and used to input a document image. Additionally, the display device 1908 is used to output an inquiry to a user, a process result, etc.

The external storage device 1906 is, for example, a magnetic disk device, an optical disk device, a magneto-optical disk device, a tape device, etc. The image processing apparatus stores the program and data in the external storage device 1906, and uses the program and the data by loading them into the RAM 1902 depending on need.

The medium driving device 1905 drives a portable recording medium 1911, and accesses its recorded contents. The portable recording medium 1911 is an arbitrary computer-readable recording medium such as a memory card, a flexible disk, an optical disk, a magneto-optical disk, etc. A user stores the program and the data onto the portable recording medium 1911, and uses the program and the data by loading them into the RAM 1902 depending on need.

The communications device 1901 is connected to an arbitrary communications network such as a LAN (Local Area Network), etc., and performs data conversion accompanying a communication. The image processing apparatus receives the program and the data from an external device via the communications device 1901, and uses the program and the data by loading them into the RAM 1902 depending on need. The communications device 1901 is used also when the data management server is accessed in step 1403 of Fig. 14.

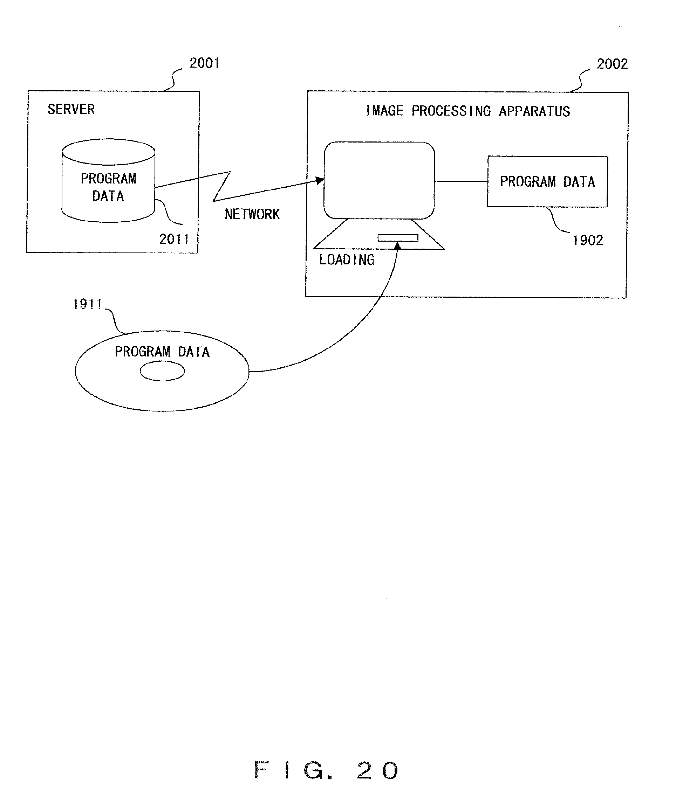

Fig. 20 shows methods for providing the program and the data to the image processing apparatus shown in Fig. 19. The program and the data stored onto the portable recording medium 1911 or in a database 2011 of a server 2001 are loaded into the RAM 1902 of the image processing apparatus 2002. The server 2001 generates a propagation signal for propagating the program and the data, and transmits the generated signal to an image processing apparatus 2002 via an arbitrary transmission medium on a network. The CPU 1904 executes the program by using the data, and performs necessary processes.

## Claims

1. An image processing apparatus, comprising:
a storing unit for storing image data of a partial image of a document that includes a plurality of process targets and a plurality of codes;
a recognizing unit for recognizing a code included in the partial image among the plurality of codes, and for obtaining relative position information that represents a relative position of a process target region to the code; and
an extracting unit for identifying a position of the process target region within the partial image by using the relative position information, and for extracting image data of a process target from the identified process target region.

2. A program for causing a computer to execute a process, the process comprising:
inputting image data of a partial image of a document that includes a plurality of process targets and a plurality of codes, and storing the image data in a storing unit;
recognizing a code included in the partial image among the plurality of codes, and obtaining relative position information that represents a relative position of a process target region to the code;
identifying a position of the process target region within the partial image by using the relative position information; and
extracting image data of a process target from the identified process target region.

3. The program according to claim 2, the process comprising:
obtaining, from the code included in the partial image, absolute position information that represents an absolute position of the process target region within the document;
extracting layout information of the process target region from layout information of the entire document by using the absolute position information; and
making character recognition for the image data of the process target by applying the layout information of the process target region to the image data of the process target.

4. The program according to claim 2, the process comprising:
if the document is partitioned into a plurality of parts and read, inputting image data of a partial image of each of the plurality of parts, and storing the image data in the storing unit;
obtaining relative position information and document attribute information by recognizing a code included in each of the plurality of partial images;
extracting image data of a process target from each of the plurality of partial images by using the relative position information; and
configuring, from the extracted image data, image data of the entire document according to the document attribute information.

5. The program according to claim 2, the process comprising:
obtaining process information, which represents a process to be executed for the image data of the process target, from the code included in the partial image; and
performing a process specified by the process information.

6. The program according to claim 2, the process comprising:
if two or more codes are arranged in different positions within the document in correspondence with at least one of the plurality of process targets, and the process target region of the process target is partitioned into a plurality of parts and read, inputting image data of a partial image including each of the plurality of parts, and storing the image data in the storing unit;
obtaining relative position information by recognizing a code included in each partial image;
extracting image data of a portion of the process target from each partial image by using the relative position information; and
configuring image data of the entire process target from the extracted image data.

7. The program according to claim 2, the process comprising
if the process target and the code are superimposed and printed in different colors within the document, separating the code from the partial image, and recognizing the code.

8. The program according to claim 2, the process comprising:
if the relative position information is stored in a server, obtaining, from the code included in the partial image, identification information for identifying the relative position information within the server; and
obtaining the relative position information from the server by using the identification information.

9. The program according to claim 2, the process comprising:
detecting whether or not the document is moving while inputting a moving image of the document; and
recognizing the code included in the partial image by using the partial image input when the document stands still.

10. An image processing method, comprising :
causing a storing unit to store image data of a partial image of a document that includes a plurality of process targets and a plurality of codes;
causing a recognizing unit to recognize a code included in the partial image among the plurality of codes, and to obtain relative position information that represents a relative position of a process target region to the code; and
causing an extracting unit to identify a position of the process target region within the partial image by using the relative position information, and to extract image data of a process target from the identified process target region.
